# EUROPÄISCHE PATENTANMELDUNG

(11) **EP 2 289 857 A2**
(43) Veröffentlichungstag der Anmeldung: **02.03.2011**
(21) Anmeldenummer: 10172288.2
(22) Anmeldetag: 09.08.2010
(51) Int. Cl.: C04B 7/24, C04B 7/28, C04B 14/02, C04B 14/10, C04B 28/02, C04B 28/10, C04B 28/14

(54) **Feuchtigkeit und flüchtige organische Verbindungen speicherndes Baustoffgemisch und Verputz**

(30) Priorität: 28.08.2009 CH 13382009
(71) Anmelder: EMPA, 8600 Dübendorf (CH)
(72) Erfinder: Braun, Reiner, 70806 Kornwestheim (DE); Simmler, Hans, 8636 Wald (CH); Vonbank, Roger, 8304 Wallisellen (CH); Blessing, Rudi, 8610 Uster (CH)
(74) Vertreter: Schneider Feldmann AG Patent- und Markenanwälte

(57) **Zusammenfassung**

Es wird ein Baustoffgemisch und ein Verputz offenbart, welcher Feuchtigkeit aus der Raumluft aufnehmen und abgeben kann und zusätzlich leicht flüchtige organische Verbindungen (VOCs) aus der Raumluft adsorbiert und damit aus der Raumluft entfernt. Aus dem Baustoffgemisch kann ein Verputz als druckfester Unterputz oder Oberputz ausgebildet sein, welche neben mindestens einem Anteil aus Aktivkohle, Adsorptionsmittel aus Mehrschichtsilikaten, wie Montmorillonit, sowie Verstärkungsmittel in Form von Cellulosefasern und/oder Kohlefasern und ein mineralisches Bindemittel umfasst.

## Beschreibung

### Technisches Gebiet

Die vorliegende Erfindung beschreibt ein Feuchtigkeit und flüchtige organische Verbindungen (VOC) speicherndes Baustoffgemisch mit mindestens einem Anteil an reinem Kohlenstoff, insbesondere aus Aktivkohle und einem Adsorptionsmittel, sowie einen Feuchtigkeit und flüchtige organische Verbindungen (VOC) speichernden Verputz zum Auftragen auf Decken, Böden und Wände von Innenräumen, wobei der Verputz mindestens einen Anteil Aktivkohle und ein Adsorptionsmittel umfasst.

### Stand der Technik

Im Baugewerbe wird die Adsorption von Luftfeuchtigkeit im Innenbereich zur Schaffung eines für Menschen angenehmen Raumklimas und die daraus resultierende Behaglichkeit angestrebt. Zu diesem Zweck wurden immer wieder Materialien für Innenoberflächen eingesetzt, welche eine hohe Feuchteaufnahme aufweisen und während des Lüftungsvorganges diese Feuchtigkeit schnell wieder abgeben können.

Zur Bestimmung der Feuchtespeichereigenschaft von Stoffgemischen und Formteilen dient der Moisture Buffer Value (MBV), der im Wesentlichen die flächenbezogene Feuchteaufnahme des Materials bei einer stufenartigen Erhöhung der relativen Luftfeuchte von 33 % auf 75 % nach 8 Stunden beschreibt. Dabei wird ein möglichst hoher MBV in g/(m2 %relative Luftfeuchtigkeit) angestrebt.

Neben der Aufnahme und Abgabe von Luftfeuchtigkeit sind Materialien für den Einsatz im Innenraum interessant, welche zusätzlich grosse Mengen flüchtiger organischer Verbindungen (volatile organic compounds, VOCs) aus der Raumluft aufnehmen können. Zu den VOCs werden gemäss Weltgesundheitsorganisation alle organischen Verbindungen (Substanzen die primär aus Kohlenstoff und Wasserstoff bestehen) mit Siedepunkten im Bereich von 50°C bis 260°C, mit Ausnahme von Pestiziden gezählt.

### Quelle: http://www.npi.gov.au/database/substanceinfo/profiles/88.html.

Da sich der Mensch bis zu 90% seiner Zeit in Räumen aufhält ist die Beseitigung von Luftverunreinigungen zur Steigerung der Behaglichkeit von grossem Interessen. Bislang sind aber kaum Materialien bekannt, welche neben einer hohen Feuchtespeicherung auch eine ausreichend gute Adsorption von VOCs aufweisen.

Bevorzugt wurden beispielsweise bislang Kalk und Lehm verwendet, um Verputze herzustellen, welche die Luftqualität in Gebäudeinnenräumen verbessern. Die bekannten Materialien nehmen aber keine bis ungenügende Mengen an VOCs auf und können das Raumklima entsprechend nicht entscheidend im Bezug auf Luftverunreinigungen verbessern. Die Verwendung von Verputzen mit photokatalytischen Komponenten und die Beimischung von Zeolithen zu Gipsmaterialien brachten bislang nicht die erwünschten Verbesserungen der Luftqualität im Bezug auf VOCs.

In der JP2004010433 wird ein Stoffgemisch offenbart, welches VOCs aus der Raumluft adsorbieren kann und dadurch das sogenannte "sick house syndrom" nahezu eliminieren kann. Basierend auf Aktivkohle oder karbonisierten Partikeln wird ein Stoffgemisch unter Zugabe von Perlit und/oder Diatomeenerde hergestellt, welches vor allem zur Herstellung von Platten für den Einsatz in der Bauindustrie geeignet ist. Die porösen anorganischen Materialien bilden ein Adsorptionsmittel und führen zu einer Adsorptionsfähigkeit für Feuchtigkeit und VOCs, welche in der Bauindustrie einsetzbar ist. Gemäss der Offenbarung ist das Stoffgemisch als Bestandteil von Platten wirksam. Es werden aber keine Aussagen gemacht, ob und wie das Stoffgemisch allein zur Feuchte- und VOC-Adsorption einsetzbar ist.

### Darstellung der Erfindung

Die vorliegende Erfindung hat sich zur Aufgabe gestellt ein Baustoffgemisch und einen Verputz zu schaffen, welcher sehr gute dynamische Feuchtespeichereigenschaften aufweist und zusätzlich eine hohe Adsorption von flüchtigen organischen Verbindungen (VOC) aus der Raumluft gewährleistet.

Diese Aufgabe und zusätzlich eine verbesserte Verarbeitbarkeit des Verputzes wird durch einen Verputz gemäss Patentanspruch x gelöst, wobei besonders vorteilhafte Ausgestaltungsformen des Verputzes in den weiteren abhängigen Patentansprüchen offenbart sind.

### Kurze Beschreibung der Zeichnungen

Ein bevorzugtes Ausführungsbeispiel des Erfindungsgegenstandes wird nachstehend beschrieben. Die anliegenden Zeichnungen zeigen erzielte Messresultate betreffend die zeitliche Entwicklung der Feuchteaufnahme und -abgabe, sowie der Aufnahme von leicht flüchtigen organischen Verbindungen.
- Figur 1: zeigt die zeitliche Entwicklung der Feuchteaufnahme und - abgabe gemäss Nordtest.
- Figur 2: zeigt die zeitliche Konzentrationsabnahme, einer mit Heptan und verschiedenen Stoffgemischen gefüllten Messzelle, während

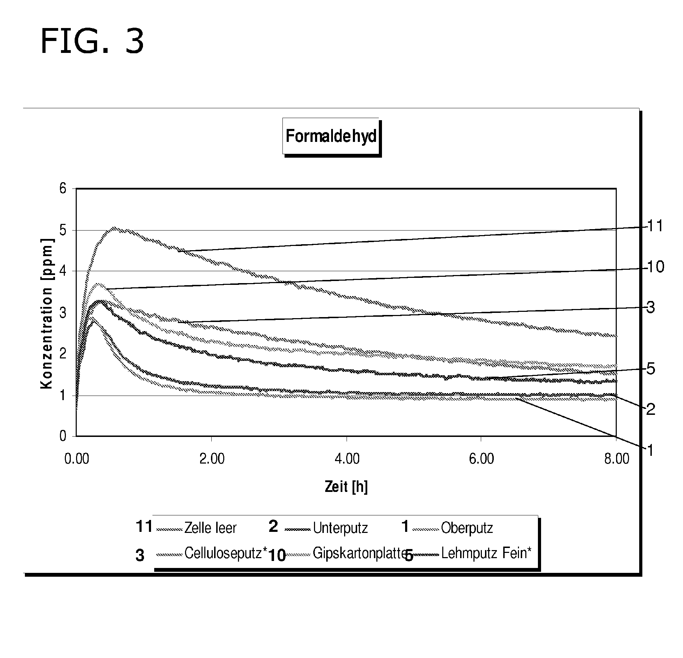

- Figur 3: die zeitliche Konzentrationsabnahme, einer mit Formaldehyd und verschiedenen Stoffgemischen gefüllten Messzelle zeigt.

### Beschreibung

Die vorliegende Erfindung umfasst ein Baustoffgemisch, welches hervorragende Feuchtespeichereigenschaften aufweist und grosse Mengen flüchtiger organischer Verbindungen (volatile organic compounds, VOCs) aus der Raumluft aufnehmen kann.

Das Baustoffgemisch umfasst einen Anteil an reinem Kohlenstoff, insbesondere aus Aktivkohle. Die Aktivkohle wurde in Form von Aktivkohlegranulat mit der Körnung 0 - 3 mm verwendet. Aktivkohle wird aus organischem Material wie Holz, Knochen, Zucker, Blut oder Nussschalen gewonnen. Das Rohmaterial wird in Zinkchlorid- oder Kaliumcarbonatlösung getränkt und anschließen unter Luftabschluss erhitzt. Somit entsteht ein porenreiches Gefüge, wobei die Poren untereinander verbunden sind.

Neben mindestens einem Kohlenstoffanteil umfasst das Baustoffgemisch einen Anteil eines Adsorptionsmittels, insbesondere aus quellfähigen Mehrschichtsilikaten. Unter dem Begriff Mehrschichtsilikate werden Zweischicht-, Dreischicht- und Vierschichttonminerale verstanden, welche aus mehreren sich abwechselnden Schichten umfassend SiO₄-Tetraeder und AlO₆-Oktaeder bestehen.

Für das Baustoffgemisch und im speziellen den daraus hergestellten Verputz ist der Einsatz von Dreischicht-Tonmineralen bzw. Dreischicht-Silikaten (Smektite), bei welchen sich Tetraederschichten und Oktaederschichten abwechseln bevorzugt. Die Silicatstruktur des Dreischichttonminerals besteht aus einer Tetraeder-Oktaeder-Tetraeder Konstruktion, die an den den Ecken miteinander verknüpft sind, eine plättchenförmige Struktur bilden und neben einer grossen inneren Oberfläche eine hohe Ionenaustauschkapazität besitzen.

Zwischen den unterschiedlichen Schichten können Kationen eingelagert werden, wodurch eine temporäre und reversible Wasseraufnahme auftritt. Aufgrund der grossen spezifischen Oberfläche (bis zu 800m²/g) können unter anderem grosse Mengen von VOCs adsorbiert werden.

Von den bekannten Dreischicht-Silikaten ist das Montmorillonit (Al₂O₃·4SiO₂·nH₂O) in Versuchsreihen erfolgreich eingesetzt worden. Die nicht starr verbundenen Schichten des Montmorillonit gewährleisten eine reversible Einlagerung von Wasser und flüchtigen organischen Verbindungen, wobei das Montmorillonit aufquillt. Die adsorbierenden Eigenschaften des Montmorillonits sorgen damit für die Feuchte- und VOC-adsorbierenden Eigenschaften.

Neben kommerziell erhältlichem Montmorillonit wurde auch Bentonit, welches einen Anteil an Montmorillonit aufweist, eingesetzt. Um einen Verputz mit hoher Druckfestigkeit, bevorzugt als Unterputz eingesetzt, herzustellen, wurde ein Bentonit benutzt, welcher etwa 44 Gewichtsprozent Montmorillonit aufwies. Der erfolgreich eingesetzte Bentonit umfasste:
44 Gewichts-% Muskovit-Montmorillonit-Gemisch
16 Gewichts-% reinen Muskovit
15 Gewichts-%Kaolinit/Chlorit
1 Gewichts-% Glaukonit
20 Gewichts-% Quarz
5 Gewichts-% Feldspat
2 Gewichts-% Karbonate
1 Gewichts-% Pyrit

Bei Zugabe von Montomorillonit als Bestandteil von Bentonit, sind die erreichbaren adsorbierenden Eigenschaften entsprechend geringer, wobei das Baustoffgemisch eine für die Verarbeitung optimierte Konsistenz aufweist.

Als Verstärkungsmittel wurde dem Baustoffgemisch in einer weiteren Ausführungsform ein Anteil Cellulosefasern zugesetzt. Cellulose ist ein Bestandteil pflanzlicher Zellwänden. Holz beispielsweise besteht zu etwa 45% aus Cellulose. Sie kann aus frischem Holz sowie aus altem Zeitungspapier gewonnen werden. Die Cellulosefasern besitzen eine gewisse Feuchtigkeitsspeicherfähigkeit, sorgen aber in erster Linie zur Steigerung der mechanischen Stabilität und damit für einen erhöhten Zusammenhalt des Baustoffgemisches.

Die verwendete Cellulose wurde aus altem Zeitungspapier gewonnen und besitzt einen Anteil an Boraten (Borsalz und Borsäure) die Schimmel und Schädlingsbefall verhindern sollen. Damit ist die Cellulose kostengünstig aus einem Recyclingprozess entnehmbar und entsprechend weiterverwendbar und darum als Verstärkungsmittel vorteilhaft.

Neben Cellulosefasern können auch bekannte organische Fasern wie zum Beispiel Polypropylen-, Polyester-, oder Nylon und/oder anorganische Fasern, wie zum Beispiel Glasfasern, Mineral- oder SiC - Fasern, und oder Kohlenstofffasern zur Steigerung der mechanischen Stabilität in Anteilen dem Baustoffgemisch zugesetzt sein. Es ist auch eine Kombination aus unterschiedlichen Fasern möglich.

Als Verstärkungsmittel können damit dem Baustoffgemisch Fasern beigemischt werden, wobei die Cellulosefasernbevorzugt sind, da sie kostengünstig aus Recyclingprozessen verwertbar sind.

Ein weiterer Anteil des Baustoffgemisches kann aus einem mineralischem Bindemittel, insbesondere aus Kalk und/oder Zement und/oder hydraulischem Kalk (NHL) und/oder Gips gebildet werden. Durch die bindenden Eigenschaften des Bindemittels ist die Verarbeitbarkeit des Baustoffgemisches anpassbar.

Das Baustoffgemisch und der daraus herstellbare Verputz weisen aber auch ohne Beimischung mineralischer Bindemittel die gewünschten Eigenschaften betreffend Feuchte- und VOC-Aufnahme auf.

Das Baustoffgemisch kann als weiteres Adsorptionsmittel Asche und damit Verbrennungsrückstände einer Holzschnitzelheizung enthalten. Die Holzschnitzelheizung dient zur Fernwärmeversorgung einer kleinen Siedlung und nutzt den Verbrennungsprozess von Holzschnitzeln verschiedener Holzarten in einem Ofen bei 950 °C. Als Verbrennungsrückstand setzt sich die Asche am Boden des Ofens ab. Die verwendete Asche entsteht hauptsächlich durch die Verbrennung von Laubholz, insbesondere Buchenholz.

Die Asche weist vor allem hohe feuchtespeichernde Eigenschaften auf, wobei aber auch die mechanische Festigkeit wie durch die Cellulosefasern erhöht wird. Da die Asche bislang nicht weiterverwendet wird, bietet sich durch die Beimischung zum erfindungsgemässen Baustoffgemisch eine Möglichkeit zur Weiterverarbeitung, wobei auf eine teure Entsorgung auf einer Deponie verzichtet werden kann.

### Verputz

Das oben beschriebene Baustoffgemisch kann als Verputz für Innenräume und zur Auftragung auf Decken, Böden und Wände verwendet werden. Dazu wurden verschiedene Mischungsverhältnisse getestet, wodurch druckfeste Unterputze und weniger druckfeste Oberputze herstellbar waren. Zu jeweils einem Anteil des Verputzes aus dem Baustoffgemisch wird ein Anteil Wasser in einem Mischungsverhältnis von etwa 1:1 gegeben, wodurch der entstandene Verputz manuell oder maschinell auftragbar wurde. Die Verputze wurden in den Versuchen mit Materialdicken von 8 bis 9 mm auf die Oberflächen aufgetragen. Auch die weiter unten beschriebenen Versuche wurden an Platten mit etwa 8 bis 9 mm dicken Verputzschichten durchgeführt.

### Unterputz

Zur Herstellung eines druckfesten Unterputzes wurden
10 bis 35 Volumen-% Aktivkohle
als Adsorptionsmittel
10 bis 35 Volumen-% Bentonit
10 bis 35 Volumen-% Asche aus der Holzschnitzelheizung
als Bindemittel
10 bis 35 Volumen-% Kalk und
als Verstärkungsmittel
1 bis 20 Volumen-% Cellulosefasern
verwendet.

In den weiter unten beschriebenen Testmessungen wurde ein Unterputz, umfassend jeweils 22.75 Volumen-% Bentonit, Aktivkohle und Asche aus der Holzschnitzelheizung, sowie 9 Volumen-% Cellulosefasern und 22.75 Volumen-% Kalk, verwendet.

Für den Unterputz wurde das etwas reaktionsträgere Bentonit verwendet, welches hinsichtlich der Druckfestigkeit bessere Eigenschaften als das Tonmineral - Montmorillonit aufweist.

### Oberputz

Zur Herstellung eines Oberputzes wurden
10 bis 40 Volumen-% Aktivkohle
als Adsorptionsmittel
8 bis 30 Volumen-% Montmorillonit
8 bis 30 Volumen-% Asche aus der Holzschnitzelheizung
als Bindemittel
10 bis 35 Volumen-% Kalk und
als Verstärkungsmittel
1 bis 20 Volumen-% Cellulosefasern, sowie
verwendet.

In den weiter unten beschriebenen Testmessungen wurde ein Oberputz, umfassend 18.3 Volumen-% Montmorillonit, 30.4 Volumen-% Aktivkohle, 18.3 Volumen-% Asche aus der Holzschnitzelheizung, sowie 9 Volumen-% Cellulosefasern und 23.8 Volumen-% Kalk, verwendet.

Da der Oberputz die ständig im Kontakt zur Raumluft stehende sichtbare Schicht ist, kommt es beim Oberputz besonders auf die schnelle Aufnahmefähigkeit von Wasserdampf und die Adsorption von Geruchsstoffen an. Durch die Zugabe des Tonminerals - Montmorillonit und Erhöhung des Aktivkohleanteils wurde dies realisiert.

Die Bestimmungen der Biegezug- und Druckfestigkeit des entwickelten Unter- bzw. Oberputzes wurden in Anlehnung an die DIN EN 1015-11 durchgeführt. Dabei ergab sich für den Unterputz eine Druckfestigkeit von 1, 4 - 1,6 N/mm2 und eine Biegezugfestigkeit bei 0,7 N/mm2. Beim Oberputz lag die Druckfestigkeit bei 1.0 N/mm2 und die Biegezugfestigkeit bei 0.3 N/mm2. die endgültigen Eigenschaften zeigen sich erst nach längerer Zeit, da die Erhärtung vom Kalk durch die CO2 Aufnahme sich bis zu einigen Jahren hinziehen kann.

Die hergestellten Verputze wurden auf Ihre Konsistenz, Verarbeitung und Trocknungszeit geprüft und mit bislang bekannten handelsüblichen Verputzen gemäss dem Stand der Technik verglichen. Die Verarbeitungseigenschaften des erfindungsgemässen Baustoffgemisches bzw. Verputzes ähneln den Eigenschaften bekannter Verputze, sodass der Fachmann den Verputz in bekannter Art auf Wände, Decken und Böden aufbringen kann, wobei aufgrund der starken Feuchteadsorptionsfähigkeit etwa mehr handwerkliches Geschick notwendig ist, um den Verputz gleichmässig unter möglichst geringer Rissbildung auf Oberflächen aufzubringen.

### Versuchsergebnisse:

Zur Charakterisierung der Adsorptionsfähigkeit von Feuchtigkeit, von flüchtigen organischen Verbindungen und leicht flüchtigen organischen Verbindungen wurde die Konzentrationsänderung gegen die Zeit in Versuchsreihen gemessen.

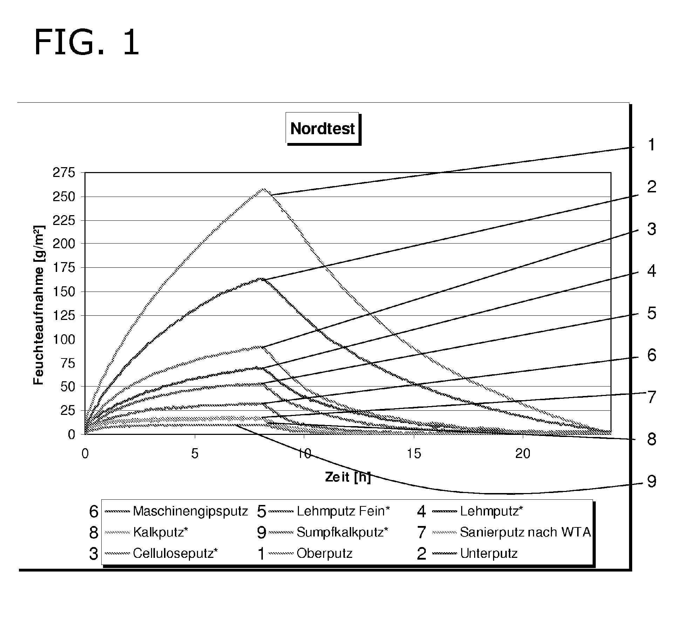

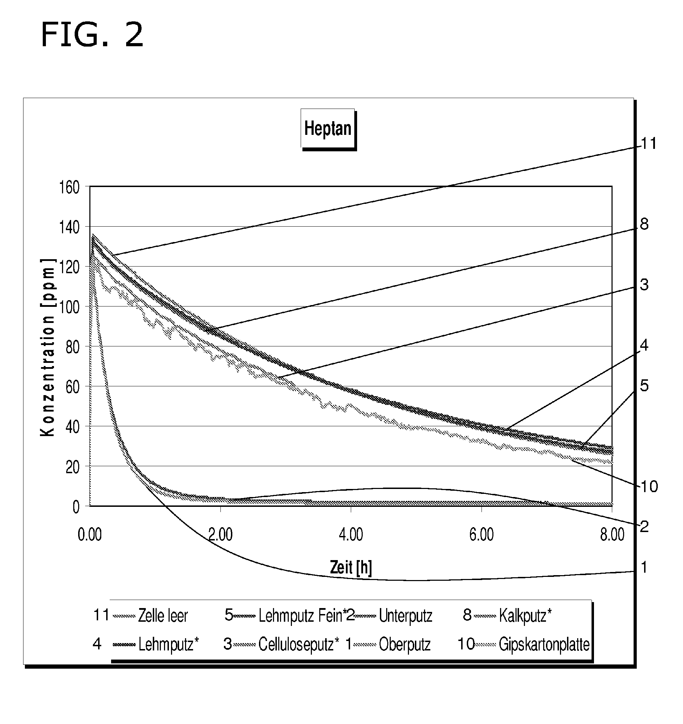

Dabei wurde eine Prüfzelle jeweils mit erfindungsgemässem Oberputz und Unterputz, sowie mit Vergleichsmaterialien bestückt und mit unterschiedlichen Luftschadstoffen in definierten Konzentrationen beaufschlagt. Anschliessend wurde die zeitliche Konzentrationsänderung der Luftschadstoffe in der Testzelle ermittelt und in den folgenden Diagrammen dargestellt. Die in den Diagrammen mit * markierten Vergleichsmaterialien haben laut jeweiligem Hersteller feuchteregulierende sowie teilweise VOC adsorbierende Eigenschaften. Zur Bestimmung der feuchteregulierenden Eigenschaften, wurde wie im Nordtestprotokoll beschrieben, die relative Luftfeuchtigkeit in der Messzelle zyklisch verändert und die zeitliche Gewichtszunahme bzw. Abnahme der Putzproben ermittelt.
1. Feuchteaufnahme Nordtest
   Neben dem erfindungsgemässen Oberputz 1 und dem Unterputz 2, wurden die zeitabhängige Feuchteaufnahme von sieben kommerziell erhältlichen Vergleichssubstanzen im sogenannten Nordtest, in einem Messzeitraum von vierundzwanzig Stunden ermittelt. Eine Celluloseputz 3, ein Lehmputz 4, ein feiner Lehmputz 5, ein Maschinengipsputz 6, sowie ein Sanierputz nach WTA 7, ein Kalkputz 8 und ein Sumpfkalkputz 9 wurden in der Prüfzelle getestet. Wie in Figur 1 sichtbar ist die Feuchteaufnahme des Oberputz 1 und des Unterputzes 2 wesentlich höher als bei den Vergleichsmaterialien.
2. Konzentrationsabnahme von Heptan
   Heptan ist ein gesättigter, acyclischer (kettenförmiger) Kohlenwasserstoff und gehört zu der Gruppe der Alkane. Heptan findet Verwendung als Lösemittel für schnelltrocknende Lacke und Klebstoffe, das beim Einatmen oder Verschlucken kann zu Gesundheitsschäden führen, da die Atem - und Verdauungswege gereizt werden.
   Die Prüfzelle wurde mit verschiedenen Baustoffgemischen bestückt und dann mit Heptan beaufschlagt. Die Konzentrationsabnahme des Heptans mit der Zeit bei Anwesenheit unterschiedlicher Materialien ist in Figur 2 gezeigt. Es wird deutlich, dass die Konzentrationsabnahme von Heptan durch Vorhandensein des Oberputz 1 und Unterputz 2 wesentlich schneller ist, als bei Verwendung der Vergleichsbaustoffgemische.
   Neben Celluloseputz 3, Lehmputz 4, feinem Lehmputz 5, Kalkputz 8 und einer bekannten Gipskartonplatte 10, wurde eine Vergleichsmessung mit einer leeren Prüfzelle 11 gemacht.
3. Konzentrationsabnahme von Formaldehyd
   Formaldehyd auch Methanal ist ein stechend riechendes, giftiges wasserlösliches Gas und wird gegenwärtig zur Herstellung von Duroplasten und Thermoplasten verwendet. In Innenräumen wird es aus Klebstoffen und anderen polymeren Materialien freigesetzt. Die Freisetzung wird durch steigende Temperatur und hohe Luftfeuchtigkeit unterstützt.
   Es konnte gezeigt werden, dass das erfindungsgemässe Baustoffgemisch und die daraus herstellbaren Verputze sehr gute feuchte- und VOC-adsorbierende Eigenschaften aufweisen.

## Patentansprüche

1. Feuchtigkeit und flüchtige organische Verbindungen (VOC) speicherndes Baustoffgemisch mit mindestens einem Anteil an reinem Kohlenstoff, insbesondere aus Aktivkohle und einem Adsorptionsmittel, **dadurch gekennzeichnet, dass**
das Baustoffgemisch
mindestens einen Anteil des quellfähigen Mehrschichtsilikates Montmorillonit als Adsorptionsmittel
und
mindestens einen Anteil organischer und/oder anorganischer Fasern als Verstärkungsmittel
umfasst.

2. Baustoffgemisch gemäss Anspruch 1, **dadurch gekennzeichnet, dass** das Baustoffgemisch einen Anteil eines mineralischen Bindemittels, insbesondere Kalk, Zement, hydraulischer Kalk oder Gips umfasst.

3. Baustoffgemisch gemäss Anspruch 1, **dadurch gekennzeichnet, dass** das Baustoffgemisch Asche aus einer Holzschnitzelverbrennungsanlage umfasst.

4. Baustoffgemisch nach Anspruch 2, **dadurch gekennzeichnet, dass** das mineralisches Bindemittel, insbesondere Kalk, im Bereich von 10 bis 35 Volumen-% des Baustoffgemisches beträgt.

5. Baustoffgemisch nach einem der vorhergehenden Ansprüche, **dadurch gekennzeichnet, dass** das Baustoffgemisch 4 bis 30 Volumen-% Montmorillonit enthält.

6. Baustoffgemisch nach einem der vorhergehenden Ansprüche, **dadurch gekennzeichnet, dass** das Baustoffgemisch Montmorillonit in Form von Bentonit enthält.

7. Baustoffgemisch nach Anspruch 6, **dadurch gekennzeichnet, dass** das Baustoffgemisch 10 bis 35 Volumen-% Bentonit enthält.

8. Baustoffgemisch nach Anspruch 1, **dadurch gekennzeichnet, dass** das Baustoffgemisch 1 bis 20 Volumen-% Cellulosefasern und/oder Kohlefasern enthält.

9. Feuchtigkeit und flüchtige organische Verbindungen (VOC) speichernder Verputz zum Auftragen auf Decken, Böden und Wände von Innenräumen, wobei der Verputz mindestens einen Anteil Aktivkohle und ein Adsorptionsmittel umfasst,
**dadurch gekennzeichnet, dass** der Verputz mindestens einen Anteil des quellfähigen Mehrschichtsilikates Montmorillonit als Adsorptionsmittel
und
mindestens einen Anteil Cellulosefasern und/oder Kohlefasern als Verstärkungsmittel
und/oder Asche aus einer Holzschnitzelverbrennungsanlage umfasst.

10. Verputz gemäss Anspruch 9, **dadurch gekennzeichnet, dass** der Verputz einen Anteil eines mineralischen Bindemittels, insbesondere Kalk, Zement, hydraulischer Kalk oder Gips umfasst.

11. Verputz gemäss Anspruch 10, **dadurch gekennzeichnet, dass** der Verputz zur Bildung eines Oberputzes:
10 bis 40 Volumen % Aktivkohle
8 bis 30 Volumen % Montmorillonit
8 bis 30 Volumen % Asche aus der Holzschnitzelheizung
10 bis 35 Volumen % Kalk und
1 bis 20 Volumen % Cellulosefasern
umfasst.

12. Verputz gemäss Anspruch 10, **dadurch gekennzeichnet, dass** der Anteil Montmorillonit in Form von Bentonit zugesetzt ist.

13. Verputz gemäss Anspruch 12, **dadurch gekennzeichnet, dass** der Verputz zur Bildung eines druckfesten Unterputzes:
10 bis 35 Volumen % Aktivkohle
10 bis 35 Volumen % Bentonit
10 bis 35 Volumen % Asche aus der Holzschnitzelheizung
10 bis 35 Volumen % Kalk und
1 bis 20 Volumen % Cellulosefasern
umfasst.

14. Verputz gemäss Anspruch 7, **dadurch gekennzeichnet, dass** die mittlere Partikelgrösse der Aktivkohle maximal 3 mm beträgt.
